# EUROPEAN PATENT SPECIFICATION

(11) **EP 3 246 921 B1**
(45) Date of publication and mention of the grant of the patent: **09.08.2023**
(21) Application number: 17000718.1
(22) Date of filing: 26.04.2017
(51) Int. Cl.: G11B 27/031, G11B 27/34

(54) **INTEGRATED MEDIA PROCESSING PIPELINE**
INTEGRIERTE MEDIENVERARBEITUNGSPIPELINE
PIPELINE DE TRAITEMENT MULTIMÉDIA INTÉGRÉ

(30) Priority: 26.04.2016 EP 16167160
(43) Date of publication of application: 22.11.2017
(73) Proprietor: TMRW Entertainment Europe S.A.R.L., 3260 Bettembourg (LU)
(72) Inventor: YERLI, Cevat, 60314 Frankfurt am Main (DE)
(74) Representative: Schmidt, Steffen

(56) References cited:
- US-A1- 2001 035 873
- US-B1- 8 253 728
- Anonymous: "Adobe Animate CC Help", , 1 February 2016 (2016-02-01), XP055409615, Retrieved from the Internet: URL:file:///C:/Users/JM03384/Documents/Ado beAnimateCCHelp.pdf [retrieved on 2017-09-25]
- Anonymous: "Unity Version 5.3 - Manual", , 8 December 2015 (2015-12-08), XP055822952, Retrieved from the Internet: URL:https://docs.unity3d.com/530/Documenta tion/Manual/Prefabs.html [retrieved on 2021-07-09]
- Anonymous: "How to do not apply fields in prefab", , 19 February 2013 (2013-02-19), XP055822693, Retrieved from the Internet: URL:https://answers.unity.com/questions/40 2138/how-to-dont-apply-fields-in-prefab.ht ml [retrieved on 2021-07-08]

## Description

### TECHNICAL FIELD

The present disclosure relates to a method, a computing device and a system for processing media content. In particular, the media content may be processed in an integrated media environment.

### BACKGROUND

In the classical process of film making, multiple stages are distinguished, which include a pre-production stage, wherein preparations for shooting the film are made; a production stage, wherein raw elements of a film are recorded; and a post-production stage, wherein images, sound, and visual effects of the recorded film are edited. Subsequently, the finished film is distributed and screened, for example, in cinemas, or released to home video. These stages are separated requiring different personnel and tools. Accordingly, if a stage is completed, such as production of the film, in the subsequent post-production stage it could be difficult to change the recorded film material or even add further content. During the stages, different tools are used to manage, record and process the media, such as during editing of the shot film material. Due to the variety of tools used during film production and post-production, the material has to be exported and re-imported using various different formats. For example, different digital content creation (DCC) tools are used during post-production, which each require an individual input of raw film data. The output of a DCC tool is to be converted again to be re-imported in other tools.

This may lead to complex processing of recorded film material. Furthermore, it could be difficult to introduce new media content or to change already recorded media content at subsequent processing stages.

Document "Adobe Animate CC Help", 2016, is a help document for a software for digital content creation. Symbols related to media elements, or their instances, may be arranged in stages. Editing a symbol updates all of its instances but applying effects to an instance of a symbol updates only that instance. When a symbol is edited, any locally changed instance properties still apply to the instance.

US 8 253 728 B1 discloses an approach for associating with each clip in a sequence of one or more clips a copy of a three-dimensional scene that was used to create the clip, where the clip is a sequence of one or more images that depict the clip's respective 3D scene from the perspective of one or more virtual cameras. In response to receiving input identifying a clip in the sequence, a copy of the identified clip's associated copy of the 3D scene is presented in an editor.

The post "How to do not apply fields in prefab" in the Unity forum on February 19, 2013 and there reply thereto available at https://answers.unity.com/questions/402138/how-to-dont-appIy-fields-in-prefab.html discusses how values of a prefabs are updated through the instances of the prefab. Updates to a value of a prefab are propagated to all instances of the prefab. To stop using the prefab value in instances of the prefab, the value of the given instance can be changed in the inspector on the instance. This will make the value to show up in bold text which means it has been changed on this instance.

### SUMMARY

The above objects are solved by a method, a computing device and a system according to the independent claims. Preferred embodiments are defined in the dependent claims.

According to a first aspect of the present disclosure, a method for processing media content in a media environment is provided, wherein the method comprises providing a plurality of media assets, each media asset having a plurality of attributes, instantiating at least one of the plurality of media assets, thereby generating one or more instances of respective media assets, wherein each instance inherits the plurality of attributes of the respective media asset and wherein a change of an attribute of a media asset is propagated to all instances of the media asset, creating at least one scene and populating the at least one scene with the one or more instances of respective media assets, creating at least one take by animating in the at least one take attributes of at least one instance in the at least one scene, creating a sequence including the at least one take, and rendering the sequence.

As used throughout this disclosure a media asset refers to various (multimedia) content or entities involved in production and post-production of the media content. For example, a media asset may be one or more of real or virtual objects, real or virtual characters, particles, cameras, lights, and audio data, in any combination. Hence, a media asset may correspond to a real character, which may be represented by an actor, or the media asset may correspond to a virtual character, which may be a computer-generated character that may be, however, controlled by an actor. Each media asset has a plurality of attributes, which may define properties of the media asset, such as an appearance or behavior of the media asset. For example, by changing an attribute of a media asset, the media asset may appear in a different position in a scene or may have a different appearance. The media assets may be seen as master templates, such that when an operator creates an instance of the master template (or media asset) into a scene, a copy of the master template (or media asset) is made, but a link between the instance and the master template (or media asset) may be kept. This concept may also be referred to throughout this disclosure as an "archetype". When an operator changes the state of a master template (or media asset), for example, by changing a value of a media asset's attribute, the change may be propagated downstream to all instances of the master template or media asset. This enables a quick change of all instances in all scenes of the media content at once in practically no time.

A scene may be typically populated with a plurality of instances of respective media assets. An attribute of a media asset may be understood as a property of the asset, such as, for example, a focal length of a camera that is represented by a media asset. Accordingly, a scene defines an arrangement or set-up of individual instances of media assets that are combined.

A take of a scene is created by animating the attributes of the instances of the media assets in the scene. Accordingly, a take of a scene may be understood as an application of animation data to instances of the scene. The take or a plurality of (further) takes are combined in a sequence. For example, the sequence may include a plurality of takes that may be cut and combined together based on a timeline.

The sequence is rendered to generate the media content. As used throughout this disclosure, rendering the sequence refers to (multi-modal) rendering, which may include visual and audio rendering, for example, to generate a video sequence. However, it is to be understood that rendering may also comprise a haptic rendering or rendering of any other modality, which may be, for example, used to generate virtual reality (VR) content. Accordingly, the rendered sequence may be ready for display on suitable display devices. Rendering may be performed using a real-time graphics engine in order to enable a direct evaluation of the results in real-time or in order to enable a direct streaming of the rendered sequence to a display device or display environment for screening or review of the media content.

The present disclosure enables an integrated processing of media content in a media environment, which integrates the instantiation of media assets for scenes, animation of the instances in takes, assembly of the takes in sequences and rendering of the sequences in a single and integrated environment. This enables a seamless processing of various media sources, adaptation of properties of individual media sources, such as media assets, a direct animation of instances of the media assets, and final rendering of the sequence in a unified way without any export or import of intermediate data.

In a preferred embodiment, the method further comprises changing an attribute of an instance, thereby creating a local value of the attribute. Accordingly, instances can be changed locally, wherein a locally changed attribute of an instance may be overwritten with the local value.

According to the invention said propagating of a change of an attribute of a media asset includes determining for each instance of the media asset whether the corresponding attribute has been changed locally in the instance, and overriding a corresponding attribute in the instance of the media asset only if the corresponding attribute has not been changed locally in the instance. Accordingly, each attribute of an instance may be overwritten with the local value instead of a propagated change to the master template or media asset.

The invention comprises providing in the at least one scene an indication of an override of an attribute of an instance. The indication may be a graphical indication, which may be provided on a (graphical) user interface to inform an operator about a respective change of attributes in respective instances. This may enable the operator to react on propagated changes and adjust the propagated values in the changed instance locally if required. This provides a direct control of overriding of attributes according to the archetype approach.

The invention further comprises creating a further scene and referencing a scene of the at least one scene in the further scene, wherein updates of instances in the referenced scene are propagated to the further scene. This enables a population of a further scene with "prefab scenes". For example, in a film project, different scenes may be filmed in the same location. Rather than re-creating the location for each scene, the location could be created once (as a prefab scene) and may be referenced in any further scenes in which the location is to be used. Any updates of the scene, which may include updates of instances in the referenced scene may be propagated to the further scene using a reference mechanism, similar to the propagation of changes of attributes of a media asset. An operator may create a scene as usual and reference the scene into another scene in order to use it. This may be achieved, for example, by dragging and dropping, in a (graphical) user interface, a scene that is to be referenced onto another further scene. The referenced scene may appear on the user interface, for example, in italic under the further scene that references it. As with the archetype system, if the state of an asset, an instance or an object, such as lights, cameras, geometry, etc., in a referenced scene is updated, then these updates are propagated to all further scenes that reference it. Even though the terms "scene", "further scene" and "referenced scene" are used throughout this disclosure, it is to be understood that these scenes represent the same type of scene. Accordingly, a further scene or referenced scene could be animated in a take, referenced in yet another scene, may reference another referenced scene, or may be processed in the same manner as a scene, in any combination.

Said propagating of updates of instances includes determining for each corresponding instance in the further scene whether the instance has been changed locally in the further scene, and overriding a corresponding instance with the update only if the corresponding instance has not been changed locally in the further scene. However, as soon as an entity or instance of the referenced scene is changed locally in the further scene, subsequent updates of the entity or instance will not influence the entity or instance in the further scene. Furthermore, an update in the entity or instance in the further scene will not influence the entity or instance in the referenced scene. An indication of an override of an instance is provided in the form of a graphical indication to be displayed on a (graphical) user interface.

The indications of an override of an attribute of an instance according to the master template or archetype of a media asset may be distinguished from an indication of an override of an instance in a referenced scene, for example, using a color coded scheme. For example, an indication of an override of a referenced scene may be presented to an operator using a blue (or any other suitable) color, while overrides of an instance of a media asset may be indicated in a green (or any other, yet different) color. However, it is to be understood that respective color coded schemes may be customized and any other colors or even the same colors may be used to present the indications. Further to a color coded scheme, the appearance of the indications may change in order to enable a differentiation of propagation of updates with regard to propagation of changes in a (graphical) user interface.

In another embodiment, attributes of instances are animated using animation data. Preferably, the animation and/or the animation data is based on key frames. As used throughout the disclosure, an animation of attributes of instances may refer to a change of the attributes over time, which may be triggered by stored or received data, which may define key frames, animation data samples or other control data. However, it is to be understood that animation does not require a change of an attribute, which may be the case in a static scene. In this case, the animation may consist of a single key frame defining a particular initial set of attributes and a length of the animation to define a (static) take. As soon as a plurality of key frames or animation data samples for at least one attribute of an instance is used, the approach may interpolate the current value of the attribute and the subsequent value of the attribute as indicated by the next key frame or the next animation data sample in order to define a change of the attribute over time. For example, a linear interpolation may be used. However, it is to be understood that any other interpolation technique may be used, for example, a (piecewise) constant interpolation, a polynomial interpolation, or a spline interpolation. Furthermore, the attributes may define a particular type of animation or restrictions to the animation according to a type and interrelation of media assets, such as forward and/or inverse kinematics with regard to hierarchically arranged joints (skeleton) of a media asset, and the like.

In a preferred embodiment, the method further comprises receiving input data, wherein the animation data is based on the received input data. The input data may be live tracking data received from a connected tracking system. The animation data derived from the live tracking data may be recorded and used for animation to create a respective take. For example, the connected tracking system may be a camera tracking system or a motion capture system which may track a live performance of actors. The live tracking data may be processed and mapped to media assets or instances of media assets in scenes and may be directly used to animate the instances of the media assets in the take. Accordingly, any performance may be seen live in the animated scene of the take. This enables an integrated production and post-production in a single and unified media environment, which may enable a creator or operator to define media assets and their instances in scenes, connect the instances to live tracking data, and animate the scene in a take in real time. Since any results can be directly seen, the creator or operator may directly react on a particular set-up of the scene or performance of the (real) actors and may adjust the media assets and scenes accordingly, which speeds up the production cycle.

In yet another embodiment, the method further comprises combining at least a part of first animation data directed at at least one instance of a first media asset in the at least one scene with at least a part of second animation data directed at at least one instance of a second media asset in the at least one scene and using the combined animation data to create a further take. For example, a first and a second media asset, such as two different actors, may be represented in a single scene, which may be animated in a plurality of takes using different animation data, which may be generated by a live performance of the actors for the different takes. For example, both actors may be recorded at the same time, thereby generating a number of takes. If the performance of the first actor is better in a first take an the performance of the other actor is better in a second take, the respective animation data for each actor may be combined from the first and second takes to generate a further take, which is also referred to in the present disclosure as a combo take. This provides for a great flexibility in combining of animation data to generate individual takes.

Preferably, a preview of the animation of a take based on the live tracking data is generated and provided to a user in real time.

In yet another embodiment, said rendering of the sequence comprises applying one or more filters to the sequence. For example, the sequences can be graded either individually or all together at the same time. Preferably, a local grade may be applied to each take making the sequence or a global grade may be applied to the entire sequence. Further filters and post-processing operations may be applied without any limitation, such as a tone mapper, which may be potentially set on a camera.

In a further embodiment, the method further comprises publishing the rendered sequence via a publishing platform. The media content representing the rendered sequence may be exported to a file that can be read by a media device or can be provided as a stream that can be directly transmitted to and received by a media device to play the media content. For example, the media device may be a VR player to play the media content in VR in real time. Likewise, the media content of the rendered sequence can be published via the internet using an online publishing system for media content, such as on a video website or on a specific distribution channel.

In a particularly preferred embodiment, the media content is a film. The film may be a linear or non-linear 2D film or 3D film. Furthermore, the media content may be VR content enabling an immersive and/or interactive perception of the media content.

According to a second aspect of the present disclosure, a computing device is provided, wherein the computing device comprises a memory storing a plurality of media assets and a processor providing a processing pipeline for processing media content in an integrated media environment. The computing device may further comprise a display. The processor is configured to provide a plurality of media assets, wherein each of the media assets may have a plurality of attributes, to instantiate at least one of the plurality of media assets, thereby generating one or more instances of respective media assets, wherein each instance inherits the plurality of attributes of the respective media asset and wherein a change of an attribute of a media asset is propagated to all instances of the media asset. The processor is further configured to create at least one scene and populate the at least one scene with the one or more instances of respective media assets, to create at least one take by animating in the at least one take attributes of at least one instance in the at least one scene, to create a sequence including the at least one take, and to render the sequence. The display may be configured to display the rendered sequence.

The memory stores computer-executable instructions and the instructions, when executed by the processor, configure the computing device to perform a method according to one or more embodiments of the present disclosure.

The computing device may execute a single tool or software application, which may be represented by the computer-executable instructions, which tool or application implements the workflow or processing pipeline according to embodiments of the present disclosure on the computing device. Hence, the computing device according to the present disclosure can be understood as a single processing workstation providing an integrated media environment to process the media content.

In a third aspect of the present disclosure, a system for processing media content is provided, the system comprising at least one computing device according to one or more embodiments of the present disclosure, a network, and at least one tracking system coupled to the at least one computing device via the network, wherein the tracking system provides animation data to the at least one computing device.

The at least one tracking system may be a motion capture system or a camera tracking system, which may track performance of actors, parameters of a scene and assets, such as cameras, lights, and the like, in a live recording. The live tracking data of the tracking system may be directly provided to the computing device to enable an animation of instances of media assets (representing the tracked actors, cameras, or lights) in scenes to create respective takes.

It is to be understood that processing steps of methods according to one or more embodiments of the present disclosure may be freely combined to define processing of structural components of computing devices or systems according to one or more embodiments of the present disclosure. Likewise, a functional configuration of structural components of computing devices or systems according to embodiments of the present disclosure may define individual processing steps of methods according to embodiments of the present disclosure, in any combination.

In yet another aspect of the present disclosure, one or more computer-readable (non-transitory) media having stored thereon instructions are provided, wherein the instructions, when executed by a computer, may configure the computer to perform a method according to one or more embodiments of the present disclosure. For example, the computer may be the computing device according to one or more embodiments of the present disclosure.

### BRIEF DESCRIPTION OF THE DRAWINGS

The specific features, aspects and advantages of the present disclosure will be better understood with regard to the following description and accompanying drawings, where:
- Fig. 1: is a flow chart of a real-time filmmaking workflow according to one embodiment of the present disclosure;
- Fig. 2: shows a graphical user interface of a tool implementing the workflow according to one embodiment of the present disclosure;
- Fig. 3: shows a graphical user interface enabling creation of scenes according to one embodiment of the present disclosure;
- Fig. 4: illustrates a graphical user interface enabling creation of takes according to one embodiment of the present disclosure;
- Fig. 5: illustrates the process of creation of a sequence according to one embodiment of the present disclosure; and
- Fig. 6: shows a graphical user interface illustrating rendering of a sequence according to one embodiment of the present disclosure.

### DETAILED DESCRIPTION

In the following description, reference is made to drawings which show by way of illustration various embodiments. Also, various embodiments will be described below by referring to several examples. It is to be understood that the embodiments may include changes in design and structure without departing from the scope of the claimed subject matter.

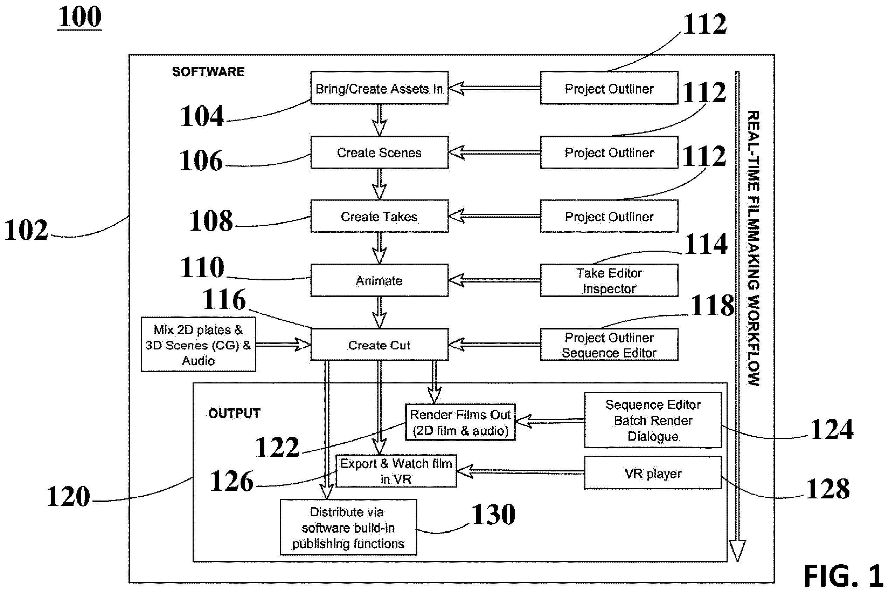

Fig. 1 illustrates a flow chart of a real-time workflow according to one embodiment of the present disclosure. The workflow 100 may define processing of media, such as during the process of film making, and may be realized in an integrated media environment 102, such as in a single tool or a software application.

The workflow 100 may start in item 104, where a plurality of media assets may be provided. Each media asset may be characterized by a plurality of attributes. The media assets may be used to create instances of the media assets. Each instance may inherit a plurality of attributes of a respective media asset and may be linked to the media asset such that a change of an attribute of the media asset is propagated to all instances of the media asset.

In item 106, one or more scenes may be created and populated with one or more instances of respective media assets. Subsequently, one or more takes may be created in item 108, by animating attributes of instances in respective scenes associated with the take, in item 110.

While the provision of media assets and creation of scenes and takes in items 104, 106 and 108, respectively, may be performed by a project outliner component 112 of the workflow 100, the animation in item 110 may be supported and controlled by a take editor component and an inspector component 114 of the workflow 100.

The animated scenes of the takes may be used to create one or more sequences that may be combined in item 116. The processing of item 116 may be supported by the project outliner component 112 in combination by a sequence editor component 118.

Further to the takes generated in item 110, the sequence may combine, mix and/or cut one or more of 2D plates, 3D scenes, such as computer graphics scenes, and audio. However, it is to be understood that sequences may include media data for any modality, such as for VR content, which may be provided by any kind of media source.

The sequence created in item 116 may be provided to an output component 120 of the workflow 100, which may render the sequence in order to generate media content for distribution, publishing or immediate screening or review. For example, a 2D or 3D film plus audio may be rendered in item 122. The processing of item 122 may be supported by the sequence editor component 118 in combination with a batch render dialogue component 124. The created sequence may also be rendered and exported as VR content in item 126, which may be provided to a VR player 128. Additionally or as an alternative, the created sequence may be rendered and distributed via publishing functions 130 of the workflow 100, which may be software built-in publishing functions or the like, to provide the media content according to the rendered sequence via various distribution channels, for example, via a video publishing platform.

Accordingly, the workflow 100 defines an integrated processing pipeline for processing of media content in an integrated environment 102. The workflow 100 enables an operator to create digital content, such as graphics and/or audio, for film and VR within the same application at a high speed or in real time, including rendering of the media content, playing the media content back, for example, using the dedicated VR player 128 and/or publishing.

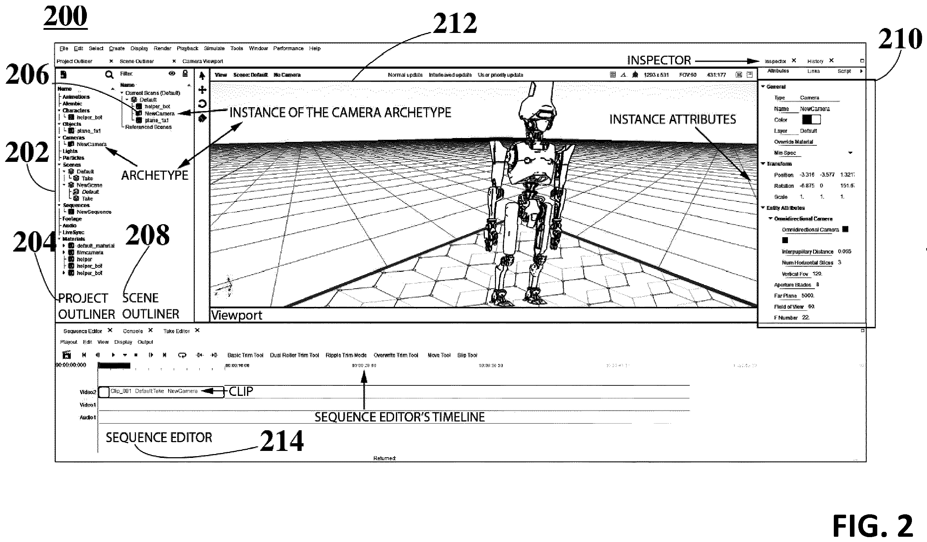

As shown in Fig. 1, the workflow 100 may be implemented using a pipeline including one or more components or modules which may be realized in software or hardware in the integrated media environment 102. The components may include one or more of the project outliner 112, a scene outliner (not shown), a viewport (not shown), the take editor 114, the sequence editor 118, an inspector (shown in combination with the take editor 114), the batch render dialogue 124 and the VR player 128, as well as built-in publishing functionalities. One or more of the components may be controlled by an operator or user via a (graphical) user interface, as discussed further below with regard to Figures 2 to 6.

The workflow 100 and respective component enable an operator of the integrated media environment 102 to create linear or non-linear media content, such as film content, from start to finish without ever leaving the integrated media environment 102 and, furthermore, to hold the entire data making up the media content together, regardless of whether the data is 3D assets, such as computer graphic scenes, or 2D assets, such as plates or footage, or audio assets, animation data and the like. The data may also contain information about how these media assets are to be assembled together and how the different scenes, takes, and sequences making up the media content are to be cut together.

The techniques or methods described herein may be implemented in various computing systems. Such systems generally involve the use of suitably-configured computing devices implementing a number of modules, each providing one or more operations needed to complete the execution of such techniques. Each module may be implemented in its own way; all need not be implemented the same way. As used herein, a module is a structural component of a system which performs an operational role, which may be a portion of or an entire software element, such as a function of a process, discrete process, or any other suitable embodiment. A module may comprise computer-executable instructions, and may be encoded on a computer storage medium. Modules may be executed in parallel or serially, as appropriate, and may pass information between one another using a shared memory on the computer on which they are executing, using a message passing protocol or in any other suitable way. Exemplary modules are described with regard to embodiment of the present disclosure, such as components of the workflow 100, as carrying out one or more tasks, though it should be appreciated that the modules and division of tasks are described as merely illustrative of the type of modules that may implement the exemplary techniques described herein, and that the present disclosure is not limited to be implemented in any specific number, division, or type of modules. In some implementations, all functionality may be implemented in a single module, which may, for example, represent the entire workflow 100.

Fig. 2 shows a graphical user interface according to an embodiment of the present disclosure. The user interface 200 may represent an integrated media environment for implementing a workflow for processing media content, such as the workflow 100 discussed with regard to Fig. 1.

As shown in Fig. 2, a media asset, for example, representing a camera, may be created by interacting with element 202 of a project outliner 204, which may correspond to the project outliner component 112 of the workflow 100 as shown in Fig 1. Subsequently, an instance of the media asset may be created, as shown by element 206 in a scene outliner 208. The instance of the media asset may inherit attributes of the media asset, which may be shown in an inspector component 210 of the graphical user interface 200. Furthermore, the instance of the media asset may be directly included into a (default) scene, which may be shown in a viewport 212. At least some of the attributes of the instance may be animated in order to generate one or more takes of the scene. The takes may be combined in a sequence editor 214.

The graphical user interface 200 may be applicable in one or more use cases.

For example, in a first used case, an operator of a system may load media assets within the system using the project outliner 204. The project outliner 204 may be the place where all the data being used to construct a film is collected. The project outliner 204 may act like a database keeping a record of all the data imported within the project. The data or media assets may include one or more of footage, animation, objects, characters, scenes and takes, sequences, audio, particles, lights, cameras, alembic/cache, connections with live tracking systems (LiveSynch connections), materials, and others, in any suitable combination. For example, the media assets may include one or more of objects, characters, particles, cameras, lights, and/or audio.

All media assets and further data imported in the project may show up in the project outliner 204. However, it is to be understood that at this point the media assets and data are not necessarily used in individual scenes. Rather, the media assets and other data can just be seen as a master template or archetype from which instances may be created for use in individual scenes.

Once the operator imported the media assets and further data making up the film project, the operator may create a desired number of scenes, for example by defining a perspective and arranging instances of the media assets in the scene. The operator can freely switch between the scenes during the same session. Each time, the operator switches scenes the viewport 212 may display the content of the selected scenes.

In order to populate a created scene with media assets and other data, the operator may create instances of the media assets from the project outliner 204. Even though media assets of the project outliner 204 may be regarded as master templates or archetypes, which inherit attributes of the media asset, instances can also be changed locally. Preferably, each attribute from an instance can be overwritten with a local value. For example, a media asset M may have attributes A and B, which may equal to 1 and 3, respectively. If an instance Mi of the media asset M is created, Mi will inherit attributes resulting in Mi->A and Mi->B and the values of the inherited attributes of the instance Mi may equal to 1 and 3, respectively. If the value of A in M is changed to 2, then this value will be propagated to all Mi's whose attribute A will also be set to 2, automatically resulting in Mi->A = 2. Now, if the operator decides to locally change this attribute with the value of 7, Mi->A = 7, this will not affect the media assets attribute and M->A will still equal to 2. Any further change to A in M will not change the value of A in Mi.

This principle may be applied to any attributes of any media assets making up the scenes regardless of an attribute type, such as float, double, matrix, file path, etc. This approach can be used to change in an instant potentially thousands of instances of media assets at once. For example, in a situation, in which the design of a main character, being represented by a media asset for the entire firm, has to be changed, it can be efficiently done using the archetype approach even though the media asset may appear in hundreds of scenes. In contrast, in a traditional approach of film making, each computer-generated scene making up the film would have to be opened, the scene with the new character design would have to be updated, the scene would have to be saved and re-rendered to a sequence of images. With the archetype approach according to embodiments of the present disclosure, the design of the media asset representing the character can be changed once on the media asset representing the master template or archetype, from which at least some instances of the media asset (those without a local overwrite) would be changed automatically at the same time.

The concept of archetypes applies to all media assets making up a project, such as cameras, lights, objects, characters and other media assets, in any combination. The content of each scene, including a list of instances created from archetypes or master templates represented as media assets can be seen in the scene outliner 208.

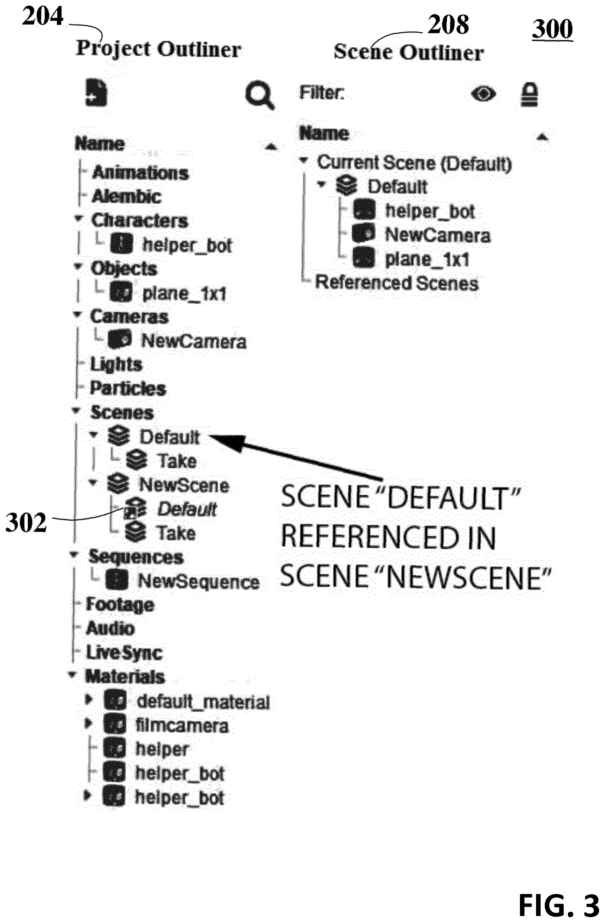

Fig. 3 shows another user interface enabling a processing according to one embodiment of the present disclosure. The user interface 300 may correspond to a part of the user interface 200 shown in Fig. 2 and similar components of user interface 300 are denoted with the same reference numerals as respective elements of the user interface 200 of Fig. 2.

The user interface 300 may include a project outliner 204 and a scene outliner 206. As discussed with regards to Fig. 2, the project outliner 305 may be used to define media assets and the scene outliner 208 may be used to manage instances of the media assets in respective scenes, wherein the content of each scene, which may include a list of instances created from archetypes or master templates represented by media assets, can be seen in the scene outliner 208.

The reference system according to embodiments of the present disclosure can be used to quickly populate scenes with pre-fabricated scenes, which may also be referred to as prefab scenes throughout this disclosure. As discussed above, in a film project it may be desirable to film different scenes in the same location. Rather than recreating the location for each scene, it may be advantageous to create a scene for the location once and reference it in further scenes in which the location is to be used. This can be done using the reference mechanism according to one or more embodiments of the present disclosure. An operator may create a (referenced) scene and may then reference that (referenced) scene in another (referencing) scene. For example, the operator may drag and drop the referenced scene on the referencing scene. The referenced scene may appear in italics or may be designated according to any other suitable scheme and may be ordered in a hierarchical order under the referencing scene. As shown in Fig. 3, a "default" scene may be referenced in scene "NewScene" in item 302. Similar to the inheritance of attributes of media assets if the state of a media asset and the referenced scene is changed, changes or updates of the referenced scene are propagated to all or at least some referencing scenes.

For example, if a scene A that is referenced in scene B contains an object O, then changing the position of O in A from [0,0,0] to [1,0,0] will also change the position of O in B (B::A->O) to the same location. However, if the location of O is locally changed in B to [0,0,2] then the position of O in B will be changed but not in scene A, where the object will stay at [1,0,0]. It is to be understood, that the values of a position change are examples only and any other suitable instance in the referenced and referencing scene may be changed without any limitation.

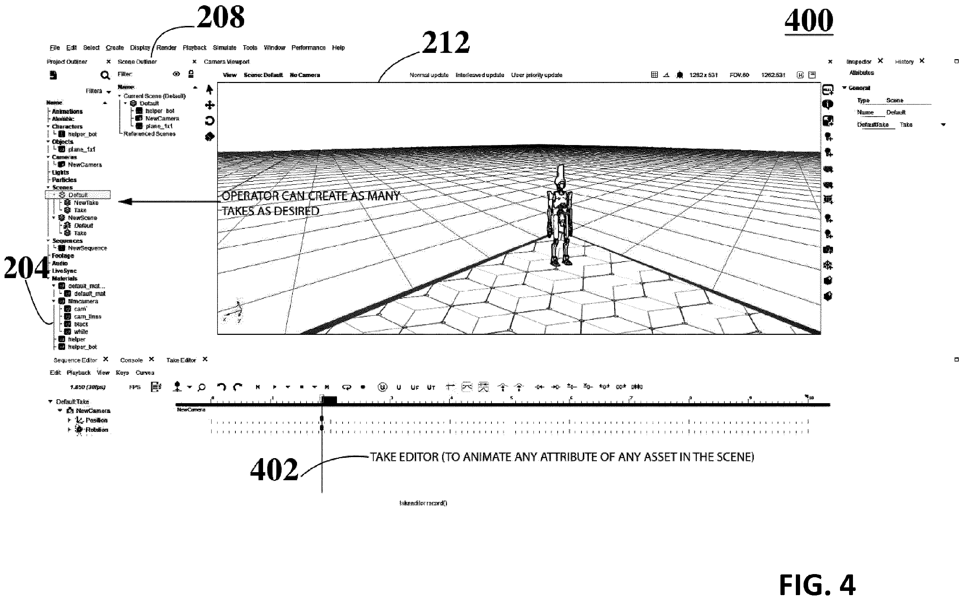

Fig. 4 shows another user interface according to one embodiment of the present disclosure. The user interface 400 may comprise similar or the same elements as user interface 200 shown in Fig. 2. Therefore, same or similar parts of user interface 400 are denoted with the same reference numerals as user interface 200 of Fig. 2.

User interface 400 may include a project outliner 204, a scene outliner 208, and a viewport 212. Furthermore, user interface 400 includes a take editor 402.

Once the content of a scene has been populated with instances of media assets, as, for example, discussed above with regard to Fig. 2, any attributes of instances making up the scene may be animated using the take editor 402. The take editor 402 may allow to animate the instance's attributes using a standard key frame approach. Different versions of an animation for a scene can be stored or saved into individiual takes. An operator can create as many takes in the scene as desired, where each take may correspond to different animation data. Accordingly, a take may be regarded as animation data applied to instances making up a scene.

Further to an animation based on stored animation data, the attributes of instances in the scenes may be animated using animation data derived from live data received from connected tracking or acquisition systems (or devices), which may be connected to the pipeline components or the integrated media environment 102 as shown in Fig. 1. The capability of receiving and recording any live data sent to a computer device implementing the pipeline from another system, such as a motion control system, a motion capture system, a camera tracking system or any other device commonly used in film or video game production, such as video controllers and the like, may also be referred to as LiveSync throughout the present disclosure and may form part of the processing system according to one or more embodiments.

The LiveSync system may be composed of a series of plug-ins, one for each supported tracing or data acquisition device (or system), which may then send data to the system via a network. If several devices (or systems) are available, several instances of plug-ins can be created to receive live data. Once a connection with the tracking or acquisition device (or system) is established, which may also be referred to as a live connection, and data is received from the tracking or acquisition device (or system), the data can be seen live in the integrated media environment, for example, via the user interface 400. For example, motion capture data may be used to animate a digital character that is represented by an instance of a respective media asset. Furthermore, camera tracking system data may be used to animate the attributes of a virtual camera, such as, a position and orientation or a focal length of the camera, and the like. The received data may be recorded for subsequent use. Furthermore, parts of the data may be associated with one or more instances of one or more media assets. For example, a motion capture system can capture a performance of a variety of actors at the same time and the received data, if connected to the motion capture system via LiveSync, may be associated with the motion for each one of the actors. Each actor may be shown as an entity or instance of a media asset, and the tracking data associated with the (instance of the) media asset may be recorded individually.

For example, if a motion capture performance system and a camera tracking system are used with different actors on set, the camera and a list of actors being ready to be recorded may be displayed. The digital characters represented by respective media assets driven by individual actors on stage may be shown in real time. However, it is to be understood that live connection may be suspended anytime if desired. This may result in stopping of the animation of attributes of the respective (instance of the) media asset, which may result in the digital characters stopping any motion. The performance of the actors may be recorded, which may result in the creation of a respective take. For example, a take may be regarded as a record of an actor's performance.

The performance of actors that has already been recorded may be played back while new performances, such as for different actors, may be recorded at the same time. Any of the takes that have been pre-recorded for a given digital character (or another media asset) for a given scene may be played back, while takes for the same or other actors in the scene controlling the same or another digital character (or media asset) are recorded. When, for a given scene, different takes for each actor making up the scene have been selected in order to play back while recording other actors' performance or recording the camera, a combined animation of a take (a "combo take") can be created. A "combo take" may be a take in which each digital character making up a scene references an already recorded take. For example, two characters A1 and A2 may be defined for a scene and the performance of the characters may be recorded at the same time for a number of takes. The performance of A1 may be selected in take i and the performance of A2 may be selected in take *j*. At the end of the recording session, a final scene may be generated where the performance of A1 from take i may be used to animate a digital character D1 and the performance of A2 from take *j* may be used to animate a digital character D2 which may result in a combination of performances for individual characters or instances of media assets that have been recorded at different times.

This concept is applicable to recording of any kind of media assets, such as actors, cameras, or plates which have been recorded via a video feed system or the like. During a recording session, an actors' performance using motion capture, camera parameters using a camera tracking system, and plates using video feeds may be recorded at the same time. These elements/data can be recorded in one or more takes and animation data from different takes for a scene can be used to individually animate the respective media assets, such as actors, cameras, plates, in the "combo take".

"Combo takes" are advantageous since they combine selected takes to generate a final sequence with preferred action for the individual media assets, such as a preferred digital characer, a preferred camera, or preferred plates, which then can be used directly within the integrated media environment to generate the final media content.

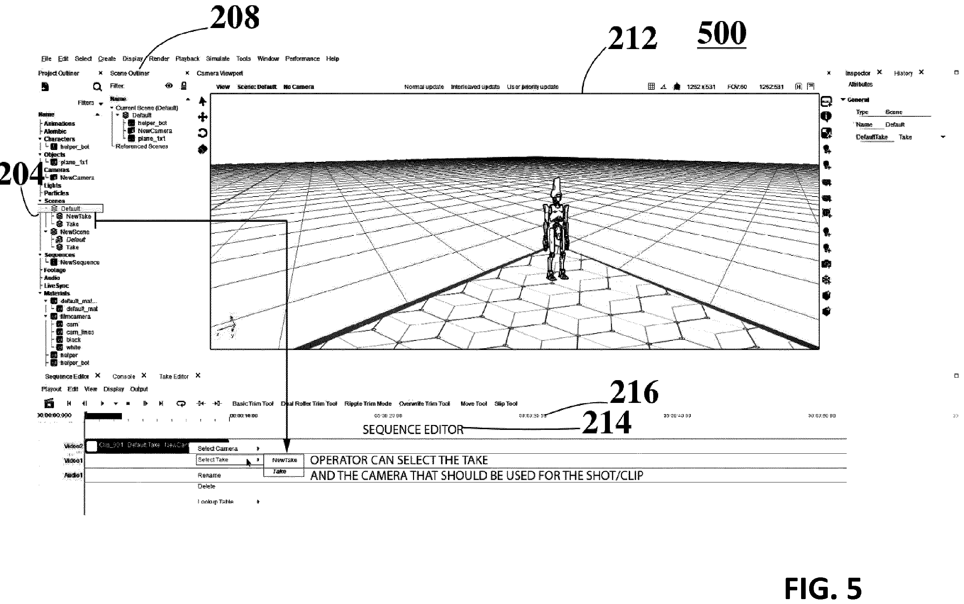

Fig. 5 shows another user interface according to one embodiment of the present disclosure. The user interface 500 may be similar to user interfaces 200 and 400 as shown in Fig. 2 and Fig 4, respectively. Therefore, similar elements have been designated with the same reference numerals. The user interface 500 may include a project outliner 204, a scene outliner 208 and a viewport 212. Furthermore, the user interface 500 may include a sequence editor 214.

As described with regard to Figures 2 to 4, the user interface 500 can be used to create and animate scenes, which may be populated with instances of media assets. Once a scene has been created and animated, an operator can create one or more sequences, for example, by using the project outliner 204. It is to be understood that an explicit modification of attributes of instances is not required to generate an animation. Rather a single static scene is sufficient to enable processing of the media content. As soon as the operator selects a sequence, the sequence editor 204 may be opened and the timeline made up of video and audio tracks may be shown, on which the operator can drag and drop scenes and cut them together.

A main operation in the process may be to place the scene on a given video or audio track on the timeline. The length of a take may be derived from the animation length of a scene. A take or clip may be trimmed or extended to a particular desired length. For each clip, a camera could be selected that should be used to render the sequence if there are more than one cameras. The takes or clips making up a sequence may be a combination of footage, such as still images, movie files or image sequences, slates with rendered text and graphics, and computer generated or computer graphic (CG) scenes. Audio clips may be treated the same way as graphics content. If a movie file contains audio, the user interface 500 may include elements to control the display, reproduction and playback of the respective audio.

Furthermore, in a use case, one or more clips or takes of a sequence can be graded either individually or all together at the same time. A focal length may be applied to each clip or take making up the sequence or a global grade may be applied to the entire sequence. Any further or a different post-processing filtering or image processing technique may be applied to adjust the final sequence.

At any point in time, an operator may review the sequeces or cuts by playing back all clips or takes or selection of clips or takes in the order in which they have been placed on the sequence editor's timeline 216.

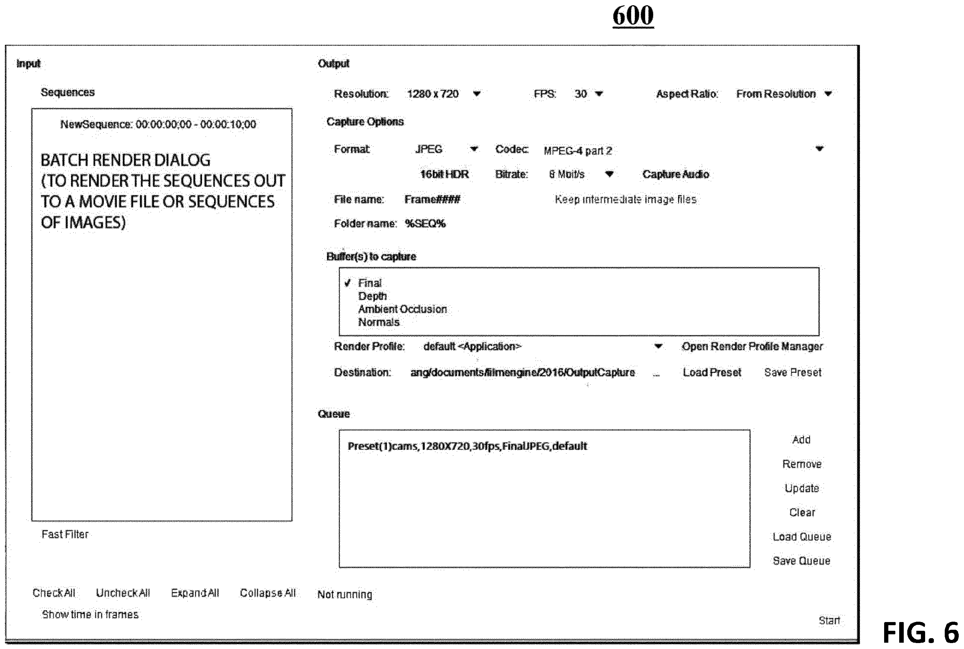

Fig. 6 shows another user interface according to one embodiment of the present disclosure. The user interface 600 may be displayed in a final stage of the media content processing approach according to one or more embodiments of the present disclosure. For example, the user interface 600 may be displayed on top of interfaces 200, 400 or 500 as discussed with regard to fig. 2, 4, and 5 respectively.

The user interface 600 may include a batch render dialogue to render sequences to a movie file or sequences of images and the like. As shown in the user interface 600, the sequence created, for example, using user interface 500 of Fig. 5 can be rendered out as a movie file with audio or a sequence of images in any suitable format, which may be selected by an operator, such as OpenEXR, JPEGs and the like. Before starting the rendering process, the operator may decide to render images out with or without grade and with or without any tone mapper potentially set on a camera, and the like, in any combination.

In a preferred use case, the integrated media environment may enable an operator to watch sequences in VR in order to review, screen or evaluate the final media content. For example, the operator may use a consumer VR headset or any other suitable VR or augmented reality (AR) devices available on the market. The content of the final media content, such as a film or VR content, may be exported to a file that can be read by a VR player (not shown) to provide the content of the media in VR in real time. Additionally or as an alternative, the finally rendered sequence may be media or VR film content and published via the Internet using a built-in publishing system. For example, the content can be published on existing video web-sites or via specific distribution channels.

The workflow described in one or more embodiments, examples or use cases of the present disclosure enables a real-time media processing workflow, such as a real-time film workflow. The tasks may be integrated within a single integrated media environment, which may be a single tool or a software application. The advantageous combination of a sequence of operations with the described reference, archetype, and/or the scene/take mechanism in a single application or tool provides for a fast and efficient integrated processing and creation of media content.

## Claims

1. A method for processing media content in a media environment (102), comprising:
providing a plurality of media assets, each media asset having a plurality of attributes and representing a master template;
instantiating at least one of the plurality of media assets, thereby generating one or more instances of respective media assets,
wherein each instance inherits the plurality of attributes of the respective media asset;
propagating a change of an attribute of a media asset to all instances of the media asset, including determining for each instance of the media asset whether the corresponding attribute has been changed locally in the instance of the media asset, overwriting a corresponding attribute in the instance of the media asset only, if the corresponding attribute in the instance of the media asset has not been changed locally in the instance of the media asset, and providing an indication of an overwrite of the corresponding attribute of the instance of the media asset, wherein the indication is a graphical indication provided on a graphical user interface to inform an operator about a respective change of attributes in respective instances of the media asset;
creating at least one scene and populating the at least one scene with the one or more instances of respective media assets;
creating at least one take by animating in the at least one take attributes of at least one instance in the at least one scene;
creating a sequence including the at least one take;
rendering the sequence; and
creating a further scene and referencing a scene of the at least one scene in the further scene;
propagating change of an attribute of an instance of a media asset in the referenced scene to the corresponding attribute of a corresponding instance in the further scene,
wherein said propagating of the change of the attribute of the instance of the media asset includes determining for each corresponding instance of the media asset in the further scene whether the corresponding attribute of the corresponding instance has been changed locally in the further scene, and overwriting the corresponding attribute of the corresponding instance in the further scene with the changed attribute of the instance of the media asset in the referenced scene only, if the corresponding attribute of the corresponding instance in the further scene has not been changed locally, and providing an indication of an overwrite of the corresponding attribute of the corresponding instance in the further scene, wherein the indication is a graphical indication displayed on the graphical user interface,
wherein an indication of an overwrite of an attribute of an instance of a media asset that represents the master template of the media asset is distinguishable from an indication of an overwrite of the corresponding attribute of the corresponding instance of the media asset in a referenced scene.

2. The method according to claim 1, wherein the attributes of each media asset define at least one of an appearance and a behavior of the media asset.

3. The method according to one of the preceding claims, wherein attributes of instances are animated using animation data.

4. The method according to one of the preceding claims, further comprising receiving input data, wherein the animation data is based on the received input data and the input data is live tracking data received from a connected tracking system; and recording the animation data derived from the live tracking data and using the recorded animation data for animation to create the at least one take.

5. The method according to one of the preceding claims, further comprising combining at least a part of first animation data directed at at least one instance of a first media asset in the at least one scene with at least a part of second animation data directed at at least one instance of a second media asset in the at least one scene and using the combined animation data to create a further take.

6. The method of claim 4 or 5 further comprising generating a preview of the animation based on the live tracking data.

7. The method according to one of the preceding claims, wherein a plurality of takes is created and the sequence includes the plurality of takes that are cut together according to a timeline (216), and/or wherein said rendering of the sequence comprises applying one or more filters to the sequence.

8. The method according to one of the preceding claims, further comprising publishing the rendered sequence via a publishing platform.

9. The method according to one of the preceding claims, wherein the media assets include one or more of objects, characters, particles, cameras, lights, and audio; and/or wherein the rendered sequence is VR content.

10. A computing device comprising:
a memory storing a plurality of media assets and computer-executable instructions;
a processor providing a processing pipeline for processing media content in a media environment (102); and
a display, wherein the instructions, when executed by the processor, configure the computing device to perform a method according to one of the preceding claims and wherein the display is for displaying the rendered sequence.

11. A system for processing media content, comprising:
at least one computing device according to claim 10;
a network; and
at least one tracking system coupled to the at least one computing device via the network, wherein the tracking system provides animation data to the at least one computing device.

## Patentansprüche

1. Verfahren zum Verarbeiten von Medieninhalt in einer Medienumgebung (102), umfassend:
Bereitstellen einer Vielzahl von Medienelementen, wobei jedes Medienelement eine Vielzahl von Attributen aufweist und eine Mastervorlage darstellt;
Instanziieren mindestens eines der Vielzahl von Medienelementen, wodurch eine oder mehrere Instanzen jeweiliger Medienelemente erzeugt werden,
wobei jede Instanz die Vielzahl von Attributen des jeweiligen Medienelements erbt;
Verbreiten einer Änderung eines Attributs eines Medienelements auf alle Instanzen des Medienelements, einschließlich Bestimmen für jede Instanz des Medienelements, ob das entsprechende Attribut lokal in der Instanz des Medienelements geändert wurde, Überschreiben eines entsprechenden Attributs in der Instanz des Medienelements nur dann, wenn das entsprechende Attribut in der Instanz des Medienelements nicht lokal in der Instanz des Medienelements geändert wurde, und Bereitstellen einer Anzeige eines Überschreibens des entsprechenden Attributs der Instanz des Medienelements, wobei die Anzeige eine grafische Anzeige ist, die auf einer grafischen Benutzeroberfläche bereitgestellt wird, um einen Bediener über eine jeweilige Änderung von Attributen in jeweiligen Instanzen des Medienelements zu informieren;
Erzeugen mindestens einer Szene und Bestücken der mindestens einen Szene mit der einen oder den mehreren Instanzen jeweiliger Medienelemente;
Erzeugen mindestens einer Aufnahme durch Animieren von Attributen mindestens einer Instanz in der mindestens einen Szene in der mindestens einen Aufnahme;
Erzeugen einer Sequenz, die die mindestens eine Aufnahme beinhaltet;
Rendern der Sequenz; und
Erzeugen einer weiteren Szene und Referenzieren einer Szene der wenigstens einen Szene in der weiteren Szene;
Verbreiten einer Änderung eines Attributs einer Instanz eines Medienelements in der referenzierten Szene auf das entsprechende Attribut einer entsprechenden Instanz in der weiteren Szene,
wobei das Verbreiten der Änderung des Attributs der Instanz des Medienelements umfasst: Bestimmen für jede entsprechende Instanz des Medienelements in der weiteren Szene, ob das entsprechende Attribut der entsprechenden Instanz lokal in der weiteren Szene geändert wurde, und Überschreiben des entsprechenden Attributs der entsprechenden Instanz in der weiteren Szene mit dem geänderten Attribut der Instanz des Medienelements in der referenzierten Szene nur dann, wenn das entsprechende Attribut der entsprechenden Instanz in der weiteren Szene nicht lokal geändert wurde, und Bereitstellen einer Anzeige eines Überschreibens des entsprechenden Attributs der entsprechenden Instanz in der weiteren Szene beinhaltet, wobei die Anzeige eine grafische Anzeige ist, die auf der grafischen Benutzeroberfläche angezeigt wird,
wobei eine Anzeige eines Überschreibens eines Attributs einer Instanz eines Medienelements, das die Mastervorlage des Medienelements darstellt, von einer Anzeige eines Überschreibens des entsprechenden Attributs der entsprechenden Instanz des Medienelements in einer referenzierten Szene unterscheidbar ist.

2. Verfahren nach Anspruch 1, wobei die Attribute jedes Medienelements mindestens eines von einem Erscheinungsbild und einem Verhalten des Medienelements definieren.

3. Verfahren nach einem der vorhergehenden Ansprüche, wobei Attribute von Instanzen unter Verwendung von Animationsdaten animiert werden.

4. Verfahren nach einem der vorhergehenden Ansprüche, ferner umfassend Empfangen von Eingabedaten, wobei die Animationsdaten auf den empfangenen Eingabedaten basieren und die Eingabedaten Live-Verfolgungsdaten sind, die von einem verbundenen Verfolgungssystem empfangen werden; und Aufzeichnen der Animationsdaten, die von den Live-Verfolgungsdaten abgeleitet sind, und Verwenden der aufgezeichneten Animationsdaten zur Animation, um die mindestens eine Aufnahme zu erzeugen.

5. Verfahren nach einem der vorhergehenden Ansprüche, ferner umfassend Kombinieren mindestens eines Teils von ersten Animationsdaten, die auf mindestens eine Instanz eines ersten Medienelements in der mindestens einen Szene gerichtet sind, mit mindestens einem Teil von zweiten Animationsdaten, die auf mindestens eine Instanz eines zweiten Medienelements in der mindestens einen Szene gerichtet sind, und Verwenden der kombinierten Animationsdaten, um eine weitere Aufnahme zu erzeugen.

6. Verfahren nach Anspruch 4 oder 5, ferner umfassend Erzeugen einer Vorschau der Animation basierend auf den Live-Verfolgungsdaten.

7. Verfahren nach einem der vorhergehenden Ansprüche, wobei eine Vielzahl von Aufnahmen erzeugt wird und die Sequenz die Vielzahl von Aufnahmen beinhaltet, die gemäß einer Zeitachse (216) zusammengeschnitten werden, und/oder wobei das Rendern der Sequenz Anwenden eines oder mehrerer Filter auf die Sequenz umfasst.

8. Verfahren nach einem der vorhergehenden Ansprüche, ferner umfassend Veröffentlichen der gerenderten Sequenz über eine Veröffentlichungsplattform.

9. Verfahren nach einem der vorhergehenden Ansprüche, wobei die Medienelemente eines oder mehrere von Objekten, Zeichen, Partikeln, Kameras, Lichtern und Audio beinhalten; und/oder wobei die gerenderte Sequenz VR-Inhalt ist.

10. Rechenvorrichtung, umfassend:
einen Speicher, der eine Vielzahl von Medienelementen und computerausführbaren Anweisungen speichert;
einen Prozessor, der eine Verarbeitungspipeline zum Verarbeiten von Medieninhalt in einer Medienumgebung (102) bereitstellt; und
eine Anzeige, wobei die Anweisungen, wenn sie durch den Prozessor ausgeführt werden, die Rechenvorrichtung konfigurieren, um ein Verfahren nach einem der vorhergehenden Ansprüche durchzuführen, und wobei die Anzeige zum Anzeigen der gerenderten Sequenz dient.

11. System zum Verarbeiten von Medieninhalt, umfassend:
mindestens eine Rechenvorrichtung nach Anspruch 10;
ein Netzwerk; und
mindestens ein Verfolgungssystem, das über das Netzwerk mit der mindestens einen Rechenvorrichtung gekoppelt ist, wobei das Verfolgungssystem der mindestens einen Rechenvorrichtung Animationsdaten bereitstellt.

## Revendications

1. Procédé de traitement de contenu multimédia dans un environnement multimédia (102), le procédé comprenant les étapes ci-dessous consistant à :
fournir une pluralité d'actifs multimédias, chaque actif multimédia présentant une pluralité d'attributs et représentant un modèle maître ;
instancier au moins un actif de la pluralité d'actifs multimédias, ce qui permet de générer par conséquent une ou plusieurs instances d'actifs multimédias respectifs, dans lequel chaque instance hérite de la pluralité d'attributs de l'actif multimédia respectif ;
propager une modification d'un attribut d'un actif multimédia, à toutes les instances de l'actif multimédia, et notamment déterminer, pour chaque instance de l'actif multimédia, si l'attribut correspondant a été modifié localement dans l'instance de l'actif multimédia, écraser un attribut correspondant dans l'instance de l'actif multimédia uniquement, si l'attribut correspondant dans l'instance de l'actif multimédia n'a pas été modifié localement dans l'instance de l'actif multimédia, et fournir une indication d'un écrasement de l'attribut correspondant de l'instance de l'actif multimédia, dans lequel l'indication est une indication graphique fournie sur une interface utilisateur graphique pour informer un opérateur d'une modification respective d'attributs dans des instances respectives de l'actif multimédia ;
créer au moins une scène et remplir ladite au moins une scène avec ladite une ou lesdites plusieurs instances d'actifs multimédias respectifs ;
créer au moins une prise en animant, dans ladite au moins une prise, des attributs d'au moins une instance dans ladite au moins une scène ;
créer une séquence incluant ladite au moins une prise ;
rendre la séquence ;
créer une scène supplémentaire et référencer une scène de ladite au moins une scène dans la scène supplémentaire ; et
propager une modification d'un attribut d'une instance d'un actif multimédia dans la scène référencée, à l'attribut correspondant d'une instance correspondante dans la scène supplémentaire ;
dans lequel ladite étape de propagation de la modification de l'attribut de l'instance de l'actif multimédia inclut les étapes consistant à déterminer, pour chaque instance correspondante de l'actif multimédia dans la scène supplémentaire, si l'attribut correspondant de l'instance correspondante a été modifié localement dans la scène supplémentaire, à écraser l'attribut correspondant de l'instance correspondante dans la scène supplémentaire avec l'attribut modifié de l'instance de l'actif multimédia dans la scène référencée uniquement, si l'attribut correspondant de l'instance correspondante dans la scène supplémentaire n'a pas été modifié localement, et à fournir une indication d'un écrasement de l'attribut correspondant de l'instance correspondante dans la scène supplémentaire, dans lequel l'indication est une indication graphique affichée sur l'interface utilisateur graphique ;
dans lequel une indication d'un écrasement d'un attribut d'une instance d'un actif multimédia qui représente le modèle maître de l'actif multimédia se distingue d'une indication d'un écrasement de l'attribut correspondant de l'instance correspondante de l'actif multimédia dans une scène référencée.

2. Procédé selon la revendication 1, dans lequel les attributs de chaque actif multimédia définissent au moins l'un des éléments parmi une apparence et un comportement de l'actif multimédia.

3. Procédé selon l'une quelconque des revendications précédentes, dans lequel des attributs d'instances sont animés en utilisant des données d'animation.

4. Procédé selon l'une quelconque des revendications précédentes, comprenant en outre l'étape consistant à recevoir des données d'entrée, dans lequel les données d'animation sont basées sur les données d'entrée reçues et les données d'entrée sont des données de suivi en direct reçues en provenance d'un système de suivi connecté, et comprenant en outre l'étape consistant à enregistrer les données d'animation dérivées des données de suivi en direct et à utiliser les données d'animation enregistrées afin de permettre à l'animation de créer ladite au moins une prise.

5. Procédé selon l'une quelconque des revendications précédentes, comprenant en outre l'étape consistant à combiner au moins une partie de premières données d'animation dirigées vers au moins une instance d'un premier actif multimédia dans ladite au moins une scène, avec au moins une partie de secondes données d'animation dirigées vers au moins une instance d'un second actif multimédia dans ladite au moins une scène, et à utiliser les données d'animation combinées en vue de créer une prise supplémentaire.

6. Procédé selon la revendication 4 ou 5, comprenant en outre l'étape consistant à générer un aperçu de l'animation sur la base des données de suivi en direct.

7. Procédé selon l'une quelconque des revendications précédentes, dans lequel une pluralité de prises est créée et la séquence inclut la pluralité de prises qui sont coupées ensemble selon une ligne temporelle (216), et/ou dans lequel ladite étape de rendu de la séquence comprend l'étape consistant à appliquer un ou plusieurs filtres à la séquence.

8. Procédé selon l'une quelconque des revendications précédentes, comprenant en outre l'étape consistant à publier la séquence rendue par l'intermédiaire d'une plateforme de publication.

9. Procédé selon l'une quelconque des revendications précédentes, dans lequel les actifs multimédias incluent un ou plusieurs éléments parmi des objets, des personnages, des particules, des caméras, des lumières et du contenu audio ; et/ou dans lequel la séquence rendue est un contenu de réalité virtuelle, VR.

10. Dispositif informatique, comprenant :
une mémoire stockant une pluralité d'actifs multimédias et des instructions exécutables par ordinateur ;
un processeur fournissant un pipeline de traitement destiné à traiter du contenu multimédia dans un environnement multimédia (102) ; et
un écran d'affichage, dans lequel les instructions, lorsqu'elles sont exécutées par le processeur, configurent le dispositif informatique de manière à mettre en oeuvre un procédé selon l'une quelconque des revendications précédentes et dans lequel l'écran d'affichage est destiné à afficher la séquence rendue.

11. Système de traitement de contenu multimédia, comprenant :
au moins un dispositif informatique selon la revendication 10 ;
un réseau ; et
au moins un système de suivi couplé audit au moins un dispositif informatique par l'intermédiaire du réseau, dans lequel le système de suivi fournit des données d'animation audit au moins un dispositif informatique.
